# EUROPEAN PATENT SPECIFICATION

(11) **EP 4 391 160 B1**
(45) Date of publication and mention of the grant of the patent: **15.04.2026**
(21) Application number: 22900401.5
(22) Date of filing: 26.11.2022
(51) Int. Cl.: H01M 10/6568, F16L 43/00, F16L 43/02, F16L 57/02, F16L 25/14

(54) **TUBE CONNECTOR, THERMAL MANAGEMENT SYSTEM, BATTERY BOX, AND BATTERY**
ROHRVERBINDER, WÄRMEVERWALTUNGSSYSTEM, BATTERIEGEHÄUSE UND BATTERIE
CONNECTEUR DE TUBE, SYSTÈME DE GESTION THERMIQUE, COMPARTIMENT DE BATTERIE ET BATTERIE

(30) Priority: 02.12.2021 CN 202123003639 U
(43) Date of publication of application: 26.06.2024
(73) Proprietor: Contemporary Amperex Technology (Hong Kong) Limited, Central, Central And Western District (HK)
(72) Inventor: XU, Chenyi, Ningde, Fujian 352100 (CN); HUANG, Xiaoteng, Ningde, Fujian 352100 (CN); HU, Langchao, Ningde, Fujian 352100 (CN); YANG, Haiqi, Ningde, Fujian 352100 (CN); WANG, Peng, Ningde, Fujian 352100 (CN); ZENG, Zhimin, Ningde, Fujian 352100 (CN); TANG, Yu, Ningde, Fujian 352100 (CN)
(74) Representative: Ziebig Hengelhaupt Intellectual Property Attorneys Patentanwaltskanzlei PartGmbB
(86) International application number: PCT/CN2022/134527
(87) International publication number: WO 2023/098597

(56) References cited:
- CN-A- 105 156 784
- CN-A- 108 390 132
- CN-U- 207 800 852
- CN-U- 216 344 596
- CN-U- 216 354 442
- DE-U1- 20 301 139

## Description

### TECHNICAL FIELD

This application relates to the technical field of battery manufacturing, and in particular, to a tube connector, a thermal management system, a battery box, and a battery.

### BACKGROUND

A thermal management system of a battery includes a flat tube and a round tube. The sealing between the existing flat tube and round tube is prone to fail at a junction, thereby leading to coolant leakage and posing safety hazards. Therefore, a reliable and stable sealing connection form is urgently needed.

Document CN108390132A shows such a flat tube connection.

### TECHNICAL PROBLEMS

One of objectives of some embodiments of this application is to provide a tube connector, a thermal management system, a battery box, and a battery to solve problems including but not limited to the problem that the sealing between a flat tube and a round tube is prone to fail at a junction in the thermal management system of the battery.

### TECHNICAL SOLUTIONS

A technical solution disclosed in an embodiment of this application is as follows:
In a first aspect, a tube connector is provided and is configured to connect a flat tube and a round tube in a thermal management system. The tube connector includes a body. A fluid channel is formed inside the body. A first connecting portion configured to be connected to the round tube and a second connecting portion configured to be connected to the flat tube are formed on the body. The first connecting portion is a hollow columnar structure. The columnar structure is configured to be socketed to the round tube. The second connecting portion includes an oblong interface. A weld face that fits a shape of the flat tube is formed on an inner sidewall of the interface.

In the tube connector according to this embodiment, the first connecting portion on the body assumes a columnar structure. The columnar structure fits well with the round tube. Therefore, a reliable hermetic connection can be formed between the tube connector and the round tube. On the other hand, an oblong interface is disposed on the second connecting portion on the body. A weld face that fits the shape of the flat tube is formed on the inner sidewall of the interface. The flat tube is inserted into the oblong interface of the tube connector, and the flat tube is connected to the tube connector by laser welding, thereby increasing strength of connection between the flat tube and the tube connector, and in turn, implementing a reliable and stable hermetic connection. To sum up, the tube connector can be hermetically connected to the round tube reliably, and can be hermetically connected to the flat tube reliably. Therefore, the tube connector according to this embodiment of this application can implement a stable and reliable hermetic connection between the flat tube and the round tube in the thermal management system.

According to the invention, the body further includes an oblong liner plate disposed in the interface. The oblong liner plate and the interface jointly define an oblong positioning groove. The positioning groove is configured to accommodate an end of the flat tube.

By disposing the oblong liner plate in the interface, the flat tube can be inserted in the positioning groove of the tube connector, thereby fixing the flat tube in the tube connector more stably. In this way, during welding of the flat tube to the tube connector, misalignment between the flat tube and the tube connector can be prevented effectively, and the welding quality is improved.

In an embodiment, a first reinforcing rib is disposed on an inner wall of the oblong liner plate. The first reinforcing rib is disposed along the fluid channel.

The first reinforcing rib disposed on the inner wall of the oblong liner plate can increase the strength of the oblong liner plate, and prevent the oblong liner plate from collapse and affecting the cross-sectional area of the fluid channel. Moreover, the first reinforcing rib can support the liner plate, thereby achieving a firmer close fit between the flat tube and the tube connector, avoiding a gap on a fitting surface between the flat tube and the tube connector, and in turn, avoiding problems such as solder skip on the weld face.

In an embodiment, the first reinforcing rib, the oblong liner plate, and the body are made of the same material.

The first reinforcing rib, the oblong liner plate, and the body are made of the same material, so that the tube connector can be manufactured by a one-piece molding process to increase the strength of the tube connector.

In an embodiment, the number of the first reinforcing ribs is one or more.

The number of the first reinforcing ribs can be designed based on the size of the tube connector and the production requirements, thereby achieving a firmer close fit between the tube connector and the flat tube.

In an embodiment, a chamfer is formed on an end face of the oblong liner plate.

By chamfering the end face of the oblong liner plate, burrs can be removed from the end face of the oblong liner plate to improve product quality.

In an embodiment, a chamfer is formed on an end face of the body.

By chamfering the end face of the body, burrs can be removed from the end face of the body to improve product quality.

In an embodiment, the tube connector further includes a sealing element. A groove capable of accommodating the sealing element is created on an outer wall of the first connecting portion. The sealing element is socketed in the groove.

The sealing element is socketed in the outer wall of the columnar structure, and the round tube is fitted onto the columnar structure, so as to improve hermeticity between the round tube and the tube connector.

In an embodiment, the sealing element is a sealing ring or a sealing washer.

The hermeticity between the round tube and the tube connector can be improved by using the sealing ring or sealing washer. The sealing ring or sealing washer is simple in structure, easy to mount and replace, and inexpensive.

In a second aspect, a thermal management system is provided, including a flat tube, a round tube, and the tube connector disclosed in any embodiment in the first aspect. The first connecting portion is connected to the round tube, and the second connecting portion is connected to the flat tube.

In the thermal management system according to an embodiment of this application, the flat tube is connected to the round tube by the tube connector. The first connecting portion on the body assumes a columnar structure. The columnar structure fits well with the round tube. Therefore, a reliable hermetic connection can be formed between the tube connector and the round tube. On the other hand, an oblong interface is disposed on the second connecting portion on the body. A weld face that fits the shape of the flat tube is formed on the inner sidewall of the interface. The flat tube is inserted into the oblong interface of the tube connector, and the flat tube is connected to the tube connector by laser welding, thereby increasing strength of connection between the flat tube and the tube connector, and in turn, implementing a reliable and stable hermetic connection. To sum up, the tube connector can be hermetically connected to the round tube reliably, and can be hermetically connected to the flat tube reliably. Therefore, the thermal management system according to this embodiment of this application can implement a stable and reliable hermetic connection between the flat tube and the round tube in the thermal management system.

In an embodiment, a second reinforcing rib is disposed on an inner wall of the flat tube along an axial direction.

By disposing the second reinforcing rib on the inner wall of the flat tube, the flat tube is prevented from deforming and affecting the flow rate of the fluid in the flat tube and the passage area of the fluid.

In an embodiment, an outer wall of the round tube is fitted with a locking hoop.

The reliability of the connection between the round tube and the tube connector can be increased by fitting the locking hoop onto the outer wall of the round tube.

In an embodiment, the flat tube is connected to the tube connector by laser welding. The flat tube and the tube connector are welded together by laser welding, thereby increasing the strength of welding between the flat tube and the tube connector, and implementing a reliable and stable hermetic connection.

In a third aspect, a battery box is provided, including the thermal management system disclosed in any embodiment in the second aspect.

The battery box according to the third aspect includes the thermal management system disclosed in any embodiment in the second aspect, and therefore, achieves the beneficial effects of any embodiment in the second aspect, details of which are omitted here.

In a fourth aspect, an embodiment of this application discloses a battery, including the thermal management system disclosed in any embodiment in the second aspect.

The battery according to the fourth aspect includes the thermal management system disclosed in any embodiment in the second aspect, and therefore, achieves the beneficial effects of any embodiment in the second aspect, details of which are omitted here.

### BRIEF DESCRIPTION OF DRAWINGS

To describe the technical solutions in some embodiments of this application more clearly, the following outlines the drawings to be used in the description of some exemplary embodiments of this application. Evidently, the drawings outlined below are merely some embodiments of this application. A person of ordinary skill in the art may derive other drawings from such drawings without making any creative efforts.
FIG. 1 is a schematic structural diagram of a body according to an embodiment of this application;
FIG. 2 is a front view of a body according to an embodiment of this application;
FIG. 3 is a side view of a body according to an embodiment of this application;
FIG. 4 is a schematic structural diagram of a flat tube, a round tube, and a tube connector assembled according to an embodiment of this application;
FIG. 5 is a schematic structural diagram of a flat tube and a tube connector assembled according to an embodiment of this application;
FIG. 6 is a front view of a flat tube and a tube connector assembled according to an embodiment of this application; and
FIG. 7 is a cross-sectional view of FIG. 6 sectioned along a section line A-A.

### List of reference numerals:

10-flat tube; 110-second reinforcing rib; 20-round tube; 30-tube connector;
300-body; 310-first connecting portion; 311-columnar structure; 312-groove;
313-sealing element; 320-second connecting portion; 321-interface; 3211-weld face;
3212-liner plate; 3213-positioning groove; 3214-first reinforcing rib; 330-fluid channel.

### DETAILED DESCRIPTION OF EMBODIMENTS

To make the objectives, technical solutions, and advantages of this application clearer, the following describes this application in further detail with reference to drawings and embodiments. Understandably, the specific embodiments described herein are merely intended to explain this application, but not to limit this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

To describe the technical solutions provided in this application, the following describes this application in detail with reference to drawings and embodiments.

With the rapid development of electronic technology, battery electric vehicles or hybrid electric vehicles are being used more widely, and are imposing higher requirements on a battery system. The energy of the battery system originates from a battery cell. This requires that the battery contains a plurality of battery cells. For each battery cell, a large amount of heat is generated during the charging and discharging, making the relatively hermetic battery work in a high-temperature environment, and impairing the service life of the battery.

In the related art, a thermal management system is usually disposed in the battery to dissipate heat for the battery cell and reduce the operating environment temperature of the battery. The thermal management system usually uses a coolant flat tube directly to dissipate heat for the battery cell. The sealing between the flat tube and a round tube is prone to fail at a junction in the thermal management system, thereby leading to coolant leakage and posing safety hazards. Therefore, a reliable and stable sealing connection form is urgently needed.

In view of the above situation, the applicant hereof has designed a tube connector, a thermal management system, and a battery through research. The tube connector is configured to connect the flat tube and the round tube in the thermal management system. The flat tube is connected to the tube connector by welding, thereby increasing strength of connection between the flat tube and the tube connector, and in turn, implementing a reliable and stable hermetic connection.

The battery is applicable to, but is not limited to use in, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

The battery includes a box and a battery cell. The battery cell is accommodated in the box. The box is configured to provide an accommodation space for the battery cell. The box may assume various structures. In some embodiments, the box may include a first part and a second part. The first part and the second part fit and cover each other. The first part and the second part together define an accommodation space configured to accommodate the battery cell. The second part may be a hollow structure opened at one end. The first part may be a plate-like structure. The first part fits and covers an opening side of the second part so that the first part and the second part jointly define the accommodation space. Alternatively, the first part and the second part may be hollow structures each opened at one side. The opening side of the first part fits and covers the opening side of the second part. Definitely, the box formed by the first part and the second part may be in various shapes, such as a cylinder or a cuboid.

The battery may contain a plurality of battery cells. The plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box. Alternatively, the plurality of battery cells may be connected in series, parallel, or series-and-parallel pattern to form a battery in the form of battery modules first. A plurality of battery modules are then connected in series, parallel, or series-and-parallel pattern to form a whole for being accommodated in the box. The battery may further include other structures. For example, the battery may further include a busbar component configured to implement electrical connection between the plurality of battery cells.

Each battery cell may be, but is not limited to, a secondary battery or primary battery; or, may be a lithium-sulfur battery, a sodium-ion battery, or a magnesium-ion battery. The battery cell may be in a shape such as a cylinder, a flat body, a cuboid, or other shapes.

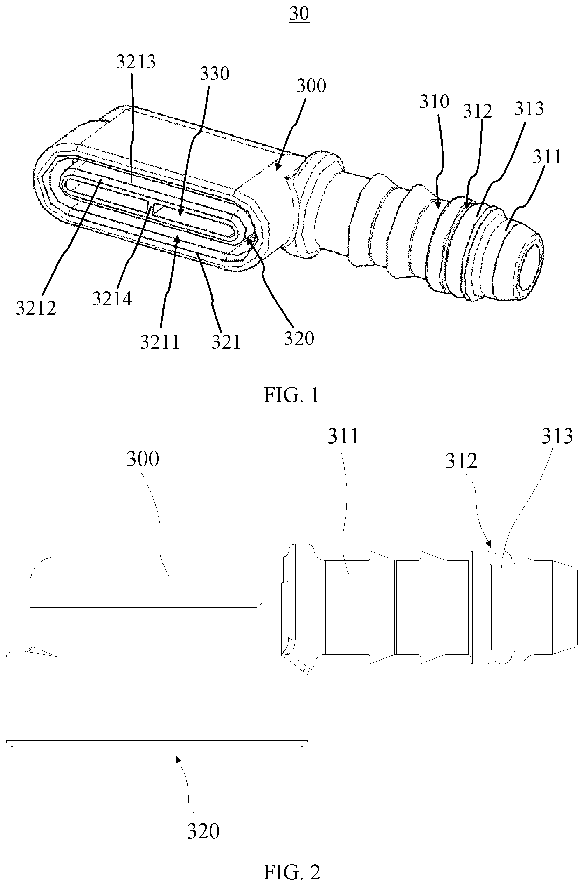

As shown in FIG. 1, FIG. 2, and FIG. 3, an embodiment of this application in a first aspect discloses a tube connector 30, configured to connect a flat tube 10 and a round tube 20 in a thermal management system of a battery. The tube connector 30 includes a body 300. A fluid channel 330 is formed inside the body 300. A first connecting portion 310 configured to be connected to the round tube 20 and a second connecting portion 320 configured to be connected to the flat tube 10 are formed on the body 300. The first connecting portion 310 is a hollow columnar structure 311. The columnar structure 311 is configured to be socketed to the round tube 20. The second connecting portion 320 includes an oblong interface 321. A weld face 3211 that fits a shape of the flat tube 10 is formed on an inner sidewall of the interface 321.

Referring to FIG. 1, the body 300 is a main structure of the tube connector 30, and may be a plastic piece. The first connecting portion 310 is configured to be connected to the round tube 20. The main shape of the first connecting portion is a columnar structure 311. The columnar structure 311 is roughly cylindrical in geometry. However, understandably, the surface of the columnar structure 311 in this embodiment is not necessarily an exact cylindrical face. In other words, the surface of the columnar structure 311 may be uneven and rugged, for example, may contain convex ribs or steps. The columnar structure 311 may be made of the same material as the body 300, so as to be manufactured by a one-piece molding process.

The second connecting portion 320 includes an oblong interface 321. The oblong interface 321 means an interface 321 defined on all sides by two parallel edges and two semicircles at two ends of the two edges, where the cross-section of the interface is oblong.

The weld face 3211 is an acting surface of a welding operation performed on two components. For example, when the components are subjected to laser welding, a surface to be processed is heated through laser radiation, and the heat on the surface is diffused inward through heat transfer. The workpiece to be processed is melted by controlling laser parameters such as the laser pulse width, energy, peak power, and repetition rate so as to form a specified molten pool, thereby welding the two components together. The weld face 3211 means an acting surface of a welding operation performed on the two components. In this embodiment, the weld face 3211 is an acting surface of a welding operation performed on the flat tube 10 and the interface 321, that is, a contact surface between the outer wall of the flat tube 10 and the inner sidewall of the interface 321. The specific type and manner of welding are not particularly limited herein.

In the tube connector 30 according to this embodiment of this application, the first connecting portion 310 on the body 300 assumes a columnar structure 311. The columnar structure 311 fits well with the round tube 20. Therefore, a reliable hermetic connection can be formed between the tube connector 30 and the round tube 20. On the other hand, an oblong interface 321 is disposed on the second connecting portion 320 on the body 300. The interface 321 means an interface 321 defined on all sides by two parallel edges and two semicircles at two ends of the two edges, where the cross-section of the interface is oblong. A weld face 3211 that fits the shape of the flat tube 10 is formed on the inner sidewall of the interface 321. The flat tube 10 is connected to the tube connector by welding, thereby increasing strength of connection between the flat tube 10 and the tube connector 30, and in turn, implementing a reliable and stable hermetic connection. To sum up, the tube connector 30 can be hermetically connected to the round tube 20 reliably, and can be hermetically connected to the flat tube 10 reliably. Therefore, the tube connector 30 according to this embodiment of this application can implement a stable and reliable hermetic connection between the flat tube 10 and the round tube 20 in the thermal management system.

In some embodiments of this application, the body 300 further includes an oblong liner plate 3212 disposed in the interface 321. The oblong liner plate 3212 and the interface 321 jointly define an oblong positioning groove 3213. The positioning groove 3213 is configured to accommodate an end of the flat tube 10.

Referring to FIG. 1, the oblong liner plate 3212 is disposed in the interface 321, and may be specifically designed based on the shape of the flat tube 10. The oblong liner plate 3212 is made of the same material as the body 300, so that the tube connector 30 can be manufactured by a one-piece molding process to increase the strength of the tube connector 30.

The positioning groove 3213 is a groove structure jointly defined by the oblong liner plate 3212 and the interface 321 and capable of accommodating the end of the flat tube 10, and is configured to accommodate the end of the flat tube 10. To be specific, the outer wall of the flat tube 10 is in contact with the inner wall of the interface 321, and the inner wall of the flat tube 10 is in contact with the outer wall of the oblong liner plate 3212. When the flat tube 10 is inserted in the positioning groove 3213, the positioning groove 3213 can also play a position limiting role. That is, the end face of the flat tube 10 abuts against the bottom of the positioning groove 3213 to prevent the flat tube 10 from being displaced during welding.

In this embodiment, the flat tube 10 is inserted in the positioning groove 3213 of the tube connector 30, thereby fixing the flat tube 10 in the tube connector 30 more stably. In this way, during welding of the flat tube 10 to the tube connector 30, misalignment between the flat tube 10 and the tube connector 30 can be prevented effectively, and the welding quality is improved.

In some embodiments of this application, a first reinforcing rib 3214 is disposed on an inner wall of the oblong liner plate 3212. The first reinforcing rib 3214 is disposed along the fluid channel 330.

The first reinforcing rib 3214 is disposed on the inner wall of the oblong liner plate 3212. The first reinforcing rib 3214 is made of the same material as both the oblong liner plate 3212 and the body 300, so that the tube connector 30 can be manufactured by a one-piece molding process to increase the strength of the tube connector 30.

The first reinforcing rib 3214 is disposed along the fluid channel 330. When the fluid flows from one end of the tube connector 30 to the other end, the fluid is able to flow in a specified direction in the process of flowing. In other words, the first reinforcing rib 3214 is disposed along the flow direction of the fluid to prevent the first reinforcing rib 3214 from interfering with the flow of the fluid. The number of the first reinforcing ribs 3214 is not particularly limited, and may be one, two, three, or the like, depending on the size of the tube connector 30 and the production requirements.

In this embodiment, the first reinforcing rib 3214 disposed on the inner wall of the oblong liner plate 3212 can increase the strength of the oblong liner plate 3212, and prevent the oblong liner plate 3212 from collapse and affecting the cross-sectional area of the fluid channel 330. Moreover, the first reinforcing rib 3214 can support the liner plate 3212, thereby achieving a firmer close fit between the flat tube 10 and the tube connector 30, avoiding a gap on a fitting surface between the flat tube 10 and the tube connector 30, and in turn, avoiding problems such as solder skip on the weld face 3211.

In some embodiments of this application, a chamfer is formed on an end face of the oblong liner plate 3212.

In this embodiment, the burrs on the end face of the oblong liner plate 3212 can be removed by chamfering, so as to improve the product quality. In addition, the flat tube 10 needs to be inserted into the positioning groove 3213 of the tube connector 30. Therefore, the chamfering of the end face of the oblong liner plate 3212 makes it easier to insert the flat tube 10 into the positioning groove 3213.

In some embodiments of this application, a chamfer is formed on an end face of the body 300.

In this embodiment, the burrs on the end face of the body 300 can be removed by chamfering, so as to improve the product quality. In addition, the flat tube 10 needs to be inserted into the positioning groove 3213 of the tube connector 30. Therefore, the chamfering of the end face of the body 300 makes it easier to insert the flat tube 10 into the positioning groove 3213.

In some embodiments of this application, the tube connector 30 further includes a sealing element 313. A groove 312 capable of accommodating the sealing element 313 is created on an outer wall of the first connecting portion 310. The sealing element 313 is socketed in the groove 312.

Referring to FIG. 2, the sealing element 313 may be a sealing ring, a sealing washer, or another member that serves a sealing function.

The groove 312 is located on the outer wall of the columnar structure 311, and is configured to accommodate the sealing element 313, and therefore, can be designed suitably based on the shape of the sealing element 313.

In this embodiment, the sealing element 313 is socketed in the outer wall of the columnar structure 311, and the round tube 20 is fitted onto the columnar structure 311, so as to improve hermeticity between the round tube 20 and the tube connector 30. In addition, the reliability of the connection between the round tube 20 and the tube connector 30 can be increased by fitting a locking hoop onto the outer wall of the round tube 20.

In some embodiments of this application, the tube connector 30 includes a body 300. A fluid channel 330 is formed inside the body 300. A first connecting portion 310 configured to be connected to the round tube 20 and a second connecting portion 320 configured to be connected to the flat tube 10 are formed on the body 300. The first connecting portion 310 is a hollow columnar structure 311. The columnar structure 311 is configured to be socketed to the round tube 20. The second connecting portion 320 includes an oblong interface 321. A weld face 3211 that fits a shape of the flat tube 10 is formed on an inner sidewall of the interface 321. The body 300 further includes an oblong liner plate 3212 disposed in the interface 321. The oblong liner plate 3212 and the interface 321 jointly define an oblong positioning groove 3213. The positioning groove 3213 is configured to accommodate an end of the flat tube 10. A first reinforcing rib 3214 is disposed on an inner wall of the oblong liner plate 3212. The first reinforcing rib 3214 is disposed along the fluid channel 330. A chamfer is formed on an end face of the oblong liner plate 3212; and/or, a chamfer is formed on an end face of the body 300. A second reinforcing rib 110 is disposed on an inner wall of the flat tube 10 along an axial direction. The flat tube 10 is connected to the tube connector by laser welding.

In the tube connector 30 according to this embodiment of this application, the first connecting portion 310 on the body 300 assumes a columnar structure 311. The columnar structure 311 fits well with the round tube 20. Therefore, a reliable hermetic connection can be formed between the tube connector 30 and the round tube 20. On the other hand, an oblong interface 321 is disposed on the second connecting portion 320 on the body 300. A weld face 3211 that fits the shape of the flat tube 10 is formed on the inner sidewall of the interface 321. The flat tube 10 is inserted into the positioning groove 3213 of the tube connector 30, and the flat tube 10 is connected to the tube connector 30 by laser welding, thereby increasing strength of connection between the flat tube 10 and the tube connector 30, and in turn, implementing a reliable and stable hermetic connection. To sum up, the tube connector 30 can be hermetically connected to the round tube 20 reliably, and can be hermetically connected to the flat tube 10 reliably. Therefore, the tube connector 30 according to this embodiment of this application can implement a stable and reliable hermetic connection between the flat tube 10 and the round tube 20 in the thermal management system.

In addition, the body 300 further includes an oblong liner plate 3212 disposed in the interface 321. The oblong liner plate 3212 and the interface 321 jointly define the oblong positioning groove 3213. The positioning groove 3213 fixes the flat tube 10 into the tube connector 30 more stably, and prevents misalignment between the flat tube 10 and the tube connector 30, thereby improving the welding quality.

Further, the first reinforcing rib 3214 disposed on the inner wall of the oblong liner plate 3212 can increase the strength of the oblong liner plate 3212, and prevent the oblong liner plate 3212 from collapse and affecting the cross-sectional area of the fluid channel 330. Moreover, the first reinforcing rib 3214 can support the liner plate 3212, thereby achieving a firmer close fit between the flat tube 10 and the tube connector 30, avoiding a gap on a fitting surface between the flat tube 10 and the tube connector 30, and in turn, avoiding problems such as solder skip on the weld face 3211. Therefore, this embodiment can implement a reliable and stable hermetic connection.

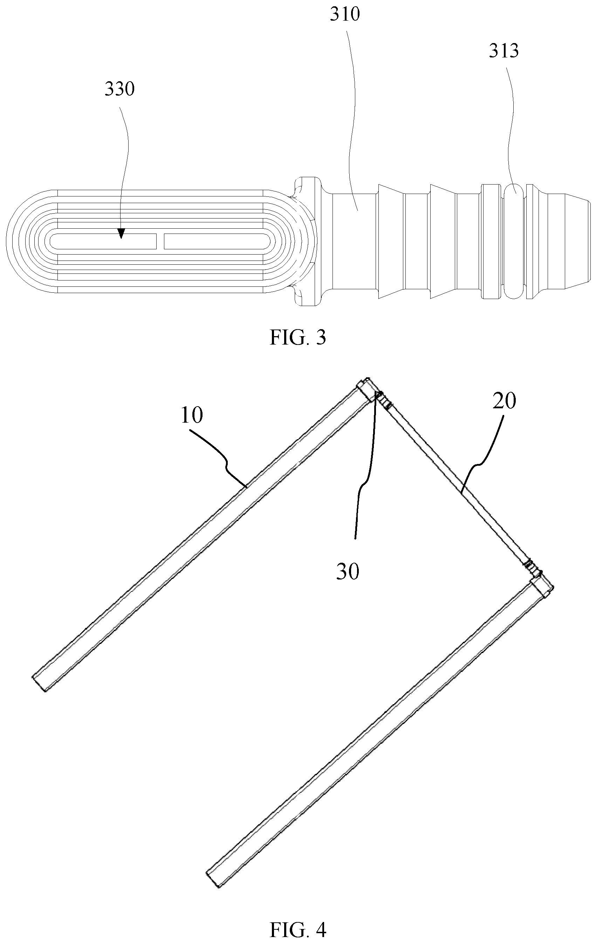

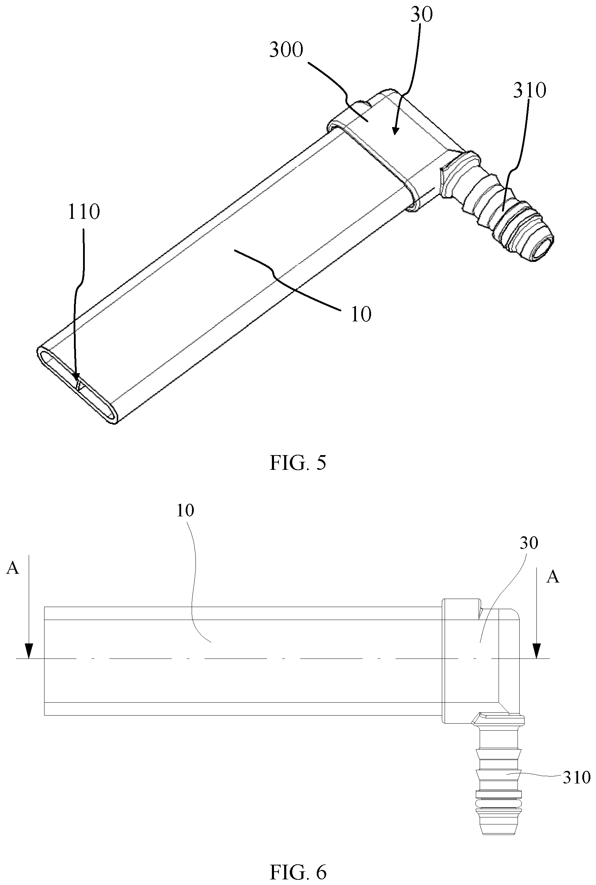

Referring to FIG. 4 and FIG. 5, an embodiment of this application in a second aspect discloses a thermal management system, including a flat tube 10, a round tube 20, and the tube connector 30 disclosed in any embodiment in the first aspect. The first connecting portion 310 is connected to the round tube 20, and the second connecting portion 320 is connected to the flat tube 10.

In the thermal management system according to this embodiment of this application, the flat tube 10 is connected to the round tube 20 by the tube connector 30. The first connecting portion 310 on the body 300 assumes a columnar structure 311. The columnar structure 311 fits well with the round tube 20. Therefore, a reliable hermetic connection can be formed between the tube connector 30 and the round tube 20. On the other hand, an oblong interface 321 is disposed on the second connecting portion 320 on the body 300. A weld face 3211 that fits the shape of the flat tube 10 is formed on the inner sidewall of the interface 321. The flat tube 10 is connected to the tube connector by welding, thereby increasing strength of connection between the flat tube 10 and the tube connector 30, and in turn, implementing a reliable and stable hermetic connection. To sum up, the tube connector 30 can be hermetically connected to the round tube 20 reliably, and can be hermetically connected to the flat tube 10 reliably. Therefore, the tube connector 30 according to this embodiment of this application can implement a stable and reliable hermetic connection between the flat tube 10 and the round tube 20 in the thermal management system.

In some embodiments of this application, a second reinforcing rib 110 is disposed on an inner wall of the flat tube 10 along an axial direction.

Referring to FIG. 5, in this embodiment, by disposing the second reinforcing rib 110 on the inner wall of the flat tube 10, the flat tube 10 is prevented from deforming and affecting the flow rate of the fluid in the flat tube 10 and the passage area of the fluid.

In some embodiments of this application, the flat tube 10 is connected to the tube connector 30 by laser welding.

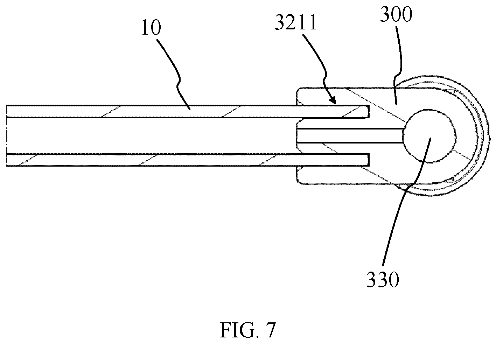

Referring to FIG. 6 and FIG. 7, laser welding is an efficient precision welding method that uses a laser beam of a high energy density as a heat source. During the laser welding, a surface to be processed is heated through laser radiation, and the heat on the surface is diffused inward through heat transfer. The workpiece to be processed is melted by controlling laser parameters such as the laser pulse width, energy, peak power, and repetition rate so as to form a specified molten pool, thereby welding the two components together. Therefore, the flat tube 10 and the tube connector 30 are welded together by laser welding in this embodiment. The weld face 3211 is a contact surface between the flat tube 10 and the inner sidewall of the interface 321, thereby increasing the strength of welding between the flat tube 10 and the tube connector 30, and implementing a reliable and stable hermetic connection.

An embodiment of this application in a third aspect discloses a battery box, including the thermal management system disclosed in any embodiment in the second aspect.

The battery box according to this embodiment includes the thermal management system disclosed in an embodiment in the second aspect, and therefore, achieves all the beneficial effects of the thermal management system in an embodiment in the second aspect. Specifically, in the thermal management system, the flat tube 10 is connected to the round tube 20 by the tube connector 30. The first connecting portion 310 on the body 300 assumes a columnar structure 311. The columnar structure 311 fits well with the round tube 20. Therefore, a reliable hermetic connection can be formed between the tube connector 30 and the round tube 20. On the other hand, an oblong interface 321 is disposed on the second connecting portion 320 on the body 300. A weld face 3211 that fits the shape of the flat tube 10 is formed on the inner sidewall of the interface 321. The flat tube 10 is connected to the tube connector by welding, thereby increasing strength of connection between the flat tube 10 and the tube connector 30, and in turn, implementing a reliable and stable hermetic connection. To sum up, the tube connector 30 can be hermetically connected to the round tube 20 reliably, and can be hermetically connected to the flat tube 10 reliably. Therefore, the tube connector 30 according to this embodiment of this application can implement a stable and reliable hermetic connection between the flat tube 10 and the round tube 20 in the thermal management system.

In a fourth aspect, an embodiment of this application discloses a battery, including the thermal management system disclosed in any embodiment in the second aspect.

The battery according to this embodiment includes the thermal management system disclosed in an embodiment in the second aspect, and therefore, achieves all the beneficial effects of the thermal management system in an embodiment in the second aspect. Specifically, in the thermal management system, the flat tube 10 is connected to the round tube 20 by the tube connector 30. The first connecting portion 310 on the body 300 assumes a columnar structure 311. The columnar structure 311 fits well with the round tube 20. Therefore, a reliable hermetic connection can be formed between the tube connector 30 and the round tube 20. On the other hand, an oblong interface 321 is disposed on the second connecting portion 320 on the body 300. A weld face 3211 that fits the shape of the flat tube 10 is formed on the inner sidewall of the interface 321. The flat tube 10 is connected to the tube connector by welding, thereby increasing strength of connection between the flat tube 10 and the tube connector 30, and in turn, implementing a reliable and stable hermetic connection. To sum up, the tube connector 30 can be hermetically connected to the round tube 20 reliably, and can be hermetically connected to the flat tube 10 reliably. Therefore, the tube connector 30 according to this embodiment of this application can implement a stable and reliable hermetic connection between the flat tube 10 and the round tube 20 in the thermal management system.

What is described above is merely optional embodiments of this application, but not intended to limit this application.

## Claims

1. A tube connector (30), configured to connect a flat tube (10) and a round tube (20) in a thermal management system of a battery, wherein the tube connector (30) comprises a body (300), a fluid channel (330) is formed inside the body (300), a first connecting portion (310) configured to be connected to the round tube (20) and a second connecting portion (320) configured to be connected to the flat tube (10) are formed on the body (300), the first connecting portion (310) is a hollow columnar structure (311), the columnar structure (311) is configured to be socketed to the round tube (20), the second connecting portion (320) comprises an oblong interface (321), and a weld face (3211) that fits a shape of the flat tube (10) is formed on an inner sidewall of the interface (321);
**characterized in that** the body (300) further comprises an oblong liner plate (3212) disposed in the interface (321), the oblong liner plate (3212) and the interface (321) jointly define an oblong positioning groove (3213), and the positioning groove (3213) is configured to accommodate an end of the flat tube (10).

2. The tube connector (30) according to claim 1, wherein a first reinforcing rib (3214) is disposed on an inner wall of the oblong liner plate (3212), and the first reinforcing rib (3214) is disposed along the fluid channel (330).

3. The tube connector (30) according to claim 2, wherein the first reinforcing rib (3214), the oblong liner plate (3212), and the body (300) are made of a same material.

4. The tube connector (30) according to claim 2, wherein a number of the first reinforcing ribs (3214) is one or more.

5. The tube connector (30) according to any one of claims 1 to 4, wherein a chamfer is formed on an end face of the oblong liner plate (3212).

6. The tube connector (30) according to any one of claims 1 to 5, wherein a chamfer is formed on an end face of the body (300).

7. The tube connector (30) according to any one of claims 1 to 6, wherein the tube connector (30) further comprises a sealing element (313), a groove (312) capable of accommodating the sealing element (313) is created on an outer wall of the first connecting portion (310), and the sealing element (313) is socketed in the groove (312).

8. The tube connector (30) according to claim 7, wherein the sealing element (313) is a sealing ring or a sealing washer.

9. A thermal management system, wherein the thermal management system comprises a flat tube (10), a round tube (20), and the tube connector (30) according to any one of claims 1 to 8, the first connecting portion (310) is connected to the round tube (20), and the second connecting portion (320) is connected to the flat tube (10).

10. The thermal management system according to claim 9, wherein a second reinforcing rib (110) is disposed on an inner wall of the flat tube (10) along an axial direction.

11. The thermal management system according to claim 9 or 10, wherein an outer wall of the round tube (20) is fitted with a locking hoop.

12. The thermal management system according to any one of claims 9 to 11, wherein the flat tube (10) is connected to the tube connector (30) by laser welding.

13. A battery box, wherein the battery box comprises the thermal management system according to any one of claims 9 to 12.

14. A battery, wherein the battery comprises the thermal management system according to any one of claims 9 to 12.

## Patentansprüche

1. Rohrverbinder (30), ausgebildet zum Verbinden eines Flachrohres (10) und eines Rundrohres (20) in einem Thermomanagementsystem einer Batterie, wobei der Rohrverbinder (30) einen Körper (300) umfasst, in dem ein Fluidkanal (330) ausgebildet ist, wobei an dem Körper (300) ein erster Anschlussabschnitt (310), der zum Verbinden mit dem Rundrohr (20) ausgebildet ist, und ein zweiter Anschlussabschnitt (320), der zum Verbinden mit dem Flachrohr (10) ausgebildet ist, ausgebildet sind, wobei der erste Anschlussabschnitt (310) eine hohle säulenförmige Struktur (311) ist, die zum Aufstecken auf das Rundrohr (20) ausgebildet ist, wobei der zweite Anschlussabschnitt (320) eine längliche Schnittstelle (321) umfasst und an einer Innenwand der Schnittstelle (321) eine Schweißfläche (3211) ausgebildet ist, die an die Form des Flachrohres (10) angepasst ist; **dadurch gekennzeichnet, dass** der Körper (300) ferner eine längliche Auskleidungsplatte (3212) umfasst, die in der Schnittstelle (321) angeordnet ist, wobei die längliche Auskleidungsplatte (3212) und die Schnittstelle (321) gemeinsam eine längliche Positionierungsnut (3213) bilden, die zum Aufnehmen eines Endes des Flachrohres (10) ausgebildet ist.

2. Rohrverbinder (30) nach Anspruch 1, wobei eine erste Verstärkungsrippe (3214) an einer Innenwand der länglichen Auskleidungsplatte (3212) angeordnet ist und sich entlang des Fluidkanals (330) erstreckt.

3. Rohrverbinder (30) nach Anspruch 2, wobei die erste Verstärkungsrippe (3214), die längliche Auskleidungsplatte (3212) und der Körper (300) aus demselben Material bestehen.

4. Rohrverbinder (30) nach Anspruch 2, wobei eine oder mehrere erste Verstärkungsrippen (3214) vorgesehen sind.

5. Rohrverbinder (30) nach einem der Ansprüche 1 bis 4, wobei an einer Stirnfläche der länglichen Auskleidungsplatte (3212) eine Fase ausgebildet ist.

6. Rohrverbinder (30) nach einem der Ansprüche 1 bis 5, wobei an einer Stirnfläche des Körpers (300) eine Fase ausgebildet ist.

7. Rohrverbinder (30) nach einem der Ansprüche 1 bis 6, wobei der Rohrverbinder (30) ferner ein Dichtelement (313) umfasst, wobei an einer Außenwand des ersten Anschlussabschnitts (310) eine Nut (312) ausgebildet ist, die zum Aufnehmen des Dichtelements (313) ausgebildet ist, und das Dichtelement (313) in die Nut (312) eingesetzt ist.

8. Rohrverbinder (30) nach Anspruch 7, wobei das Dichtelement (313) ein Dichtring oder eine Dichtscheibe ist.

9. Thermomanagementsystem, umfassend ein Flachrohr (10), ein Rundrohr (20) und den Rohrverbinder (30) nach einem der Ansprüche 1 bis 8, wobei der erste Anschlussabschnitt (310) mit dem Rundrohr (20) verbunden ist und der zweite Anschlussabschnitt (320) mit dem Flachrohr (10) verbunden ist.

10. Thermomanagementsystem nach Anspruch 9, wobei eine zweite Verstärkungsrippe (110) an einer Innenwand des Flachrohres (10) in axialer Richtung angeordnet ist.

11. Thermomanagementsystem nach Anspruch 9 oder 10, wobei an einer Außenwand des Rundrohres (20) ein Haltering angebracht ist.

12. Thermomanagementsystem nach einem der Ansprüche 9 bis 11, wobei das Flachrohr (10) mittels Laserschweißen mit dem Rohrverbinder (30) verbunden ist.

13. Batteriegehäuse, umfassend das Thermomanagementsystem nach einem der Ansprüche 9 bis 12.

14. Batterie, umfassend das Thermomanagementsystem nach einem der Ansprüche 9 bis 12.

## Revendications

1. Raccord de tube (30), configuré pour connecter un tube plat (10) et un tube rond (20) dans un système de gestion thermique d'une batterie, le raccord de tube (30) comprenant un corps (300) dans lequel un canal de fluide (330) est formé, une première portion de raccordement (310) configurée pour être raccordée au tube rond (20) et une seconde portion de raccordement (320) configurée pour être raccordée au tube plat (10) étant formées sur le corps (300), la première portion de raccordement (310) étant une structure colonnaire creuse (311) configurée pour être emboîtée sur le tube rond (20), la seconde portion de raccordement (320) comprenant une interface allongée (321), et une face de soudage (3211) adaptée à la forme du tube plat (10) étant formée sur une paroi intérieure de l'interface (321);
**caractérisé en ce que** le corps (300) comprend en outre une plaque de revêtement allongée (3212) disposée dans l'interface (321), la plaque de revêtement allongée (3212) et l'interface (321) définissant ensemble une gorge de positionnement allongée (3213), la gorge de positionnement (3213) étant configurée pour recevoir une extrémité du tube plat (10).

2. Raccord de tube (30) selon la revendication 1, dans lequel une première nervure de renforcement (3214) est disposée sur une paroi intérieure de la plaque de revêtement allongée (3212) et s'étend le long du canal de fluide (330).

3. Raccord de tube (30) selon la revendication 2, dans lequel la première nervure de renforcement (3214), la plaque de revêtement allongée (3212) et le corps (300) sont constitués d'un même matériau.

4. Raccord de tube (30) selon la revendication 2, dans lequel le nombre de premières nervures de renforcement (3214) est un ou plusieurs.

5. Raccord de tube (30) selon l'une quelconque des revendications 1 à 4, dans lequel un chanfrein est formé sur une face d'extrémité de la plaque de revêtement allongée (3212).

6. Raccord de tube (30) selon l'une quelconque des revendications 1 à 5, dans lequel un chanfrein est formé sur une face d'extrémité du corps (300).

7. Raccord de tube (30) selon l'une quelconque des revendications 1 à 6, dans lequel le raccord de tube (30) comprend en outre un élément d'étanchéité (313), une gorge (312) apte à recevoir l'élément d'étanchéité (313) étant formée sur une paroi extérieure de la première portion de raccordement (310), et l'élément d'étanchéité (313) étant emboîté dans la gorge (312).

8. Raccord de tube (30) selon la revendication 7, dans lequel l'élément d'étanchéité (313) est un joint d'étanchéité ou une rondelle d'étanchéité.

9. Système de gestion thermique comprenant un tube plat (10), un tube rond (20) et le raccord de tube (30) selon l'une quelconque des revendications 1 à 8, la première portion de raccordement (310) étant raccordée au tube rond (20) et la seconde portion de raccordement (320) étant raccordée au tube plat (10).

10. Système de gestion thermique selon la revendication 9, dans lequel une seconde nervure de renforcement (110) est disposée sur une paroi intérieure du tube plat (10) dans une direction axiale.

11. Système de gestion thermique selon la revendication 9 ou 10, dans lequel une paroi extérieure du tube rond (20) est munie d'un collier de serrage.

12. Système de gestion thermique selon l'une quelconque des revendications 9 à 11, dans lequel le tube plat (10) est raccordé au raccord de tube (30) par soudage laser.

13. Boîtier de batterie comprenant le système de gestion thermique selon l'une quelconque des revendications 9 à 12.

14. Batterie comprenant le système de gestion thermique selon l'une quelconque des revendications 9 à 12.
